# EUROPEAN PATENT APPLICATION

(11) **EP 3 135 713 A1**
(43) Date of publication of application: **01.03.2017**
(21) Application number: 15782827.8
(22) Date of filing: 20.03.2015
(51) Int. Cl.: C08J 3/22

(54) **2-MERCAPTOIMIDAZOLINE-CONTAINING MASTERBATCH**

(30) Priority: 23.04.2014 JP 2014089108
(71) Applicant: NOK Corporation, Tokyo 105-8585 (JP)
(72) Inventor: KOMURASAKI Hideto, Fujisawa-shi Kanagawa 251-0042 (JP); UCHIDA Kenichi, Fujisawa-shi Kanagawa 251-0042 (JP)
(74) Representative: Reichert & Lindner Partnerschaft Patentanwälte
(86) International application number: PCT/JP2015/058617
(87) International publication number: WO 2015/163066

(57) **Abstract**

Provided is a 2-mercaptoimidazoline-containing masterbatch having exceptional properties for dispersing 2-mercaptimidazoline in a CR compound, and improved mold staining during molding. In the 2-mercaptoimidazoline-containing masterbatch, nitrile rubber is used as a binder material. A masterbatch containing 50 - 90 mass% of 2-mercaptoimidazoline and 10 - 50 mass% of nitrile rubber is preferred.

## Description

### Technological Field:

The present invention relates to 2-mercaptoimidazoline-containing masterbatch.

2-mercaptoimidazoline is used mainly as a cross-linking accelerating agent of chloroprene rubber (referred as "CR" hereinafter). (For example, see Patent Document 1 and Patent Document 2.) An effect to be specially mentioned for adding 2-mercaptoimidazoline to a CR compound is to shorten cross-linking time as the cross-linking accelerating agent and at the same time, a cross-linking compound get excellent feature of a low permanent compression strain and high tensile strength.

On the other hand, a CR compound is mixed and produced with direct vent kneader or double roller in the production process depending on the use. In such a production process, 2-mercaptoimidazoline has high melting point, higher than 190 degrees, making it difficult to be melted in the kneading process at normal temperature between 80 and 150 degrees for kneading process. Therefore, 2-mercaptoimidazoline needs to remain in a good dispersion state as powder in the CR compound.

However, when a producer makes kneading time for CR compound longer to make the dispersion state better, a problem occurs and an adequate CR compound cannot be obtained because 2-mercaptoimidazoline is the cross-linking accelerating agent and cross-linking reaction occurs partially in the kneading process. For such a problem, it is necessary to disperse quickly the 2-mercaptoimidazoline agent before cross-linking reaction occurs partially in the kneading process.

A masterbatch is used, in which 2-mercaptoimidazoline is dispersed in high concentration in the binder material to solve the problem how to balance between the dispersion and kneading time. A commercially available masterbatch including 75 ∼ 95 mass % of 2-mercaptoimidazoline includes EPDM/EVA as a main element of the binder material.

### Prior Art

### Patent Document

Patent Document 1: Japan Patent Examined Application Publication Heisei No. 6 (1994) - 41538
Patent Document 2: Japan Patent Unexamined Application Publication Showa No. 60 (1985) - 86137

### Summary of Invention

### Task to be solved by the Invention

However, such a main element of the binder material does not have enough solubility to a CR compound, so that a masterbatch element adheres to a mold in repetitive molding processes. Finally, a problem of imperfect molding occurs by molding contamination.

The present invention is to solve the above problem. That is, an object of the present invention is to provide 2-mercaptoimidazoline-containing masterbatch which improves dispersibility of 2-mercaptoimidazoline in the CR compound and molding contamination during molding.

### Means to solve the problem

The present inventers researched the binder material for 2-mercaptoimidazoline-containing masterbatch in various aspects to solve the above problem. As a result, the inventers found that the problem can be solved by using nitrile rubber (NBR, referred to as "NBR" hereinafter) as a main element of the binder material.

That is, the present invention is 2-mercaptoimidazoline-containing masterbatch that contains nitrile rubber as binder material. Further, such a 2-mercaptoimidazoline-containing masterbatch includes preferably 2-mercaptoimidazoline : 50 ∼ 90 mass % and nitrile rubber : 50 ∼ 10 mass %. Further, such nitrile rubber includes more preferably 40 ∼ 15 mass % of acrylonitrile content.

### Effect of Invention

2-mercaptoimidazoline-containing masterbatch of the present invention shows good dispersibility of 2-mercaptoimidazoline in the CR compound and can improve mold contamination during molding.

### Embodiment of the present Invention

A description will be given of embodiments according to the present invention as follows. Note that a scope of the present invention is not limited to the embodiments as specific example's described below.

### (2-mercaptoimidazoline)

2-mercaptoimidazoline is white powder, also called as ethylene thiourea, and used as a cross-linking accelerating agent of the CR compound.

### (binder material)

The inventers of the present invention researched a binder material, which has good mutual solubility with the CR, and found that NBR has better dispersibility with the CR than the EPDM/EVA. Further, the inventers found that, when masterbatch in which masterbatch of NBR in which 2-mercaptoimidazoline is dispersed in the NBR in advance is kneaded in the CR, rapid dispersion can occur and mold contamination can be reduced. These results are presumed because NBR has an SP value closer (more similar) to the SP value of the CR than the SP value of EPDM/EVA

NBR of a binder material has preferably 15 ∼ 40 mass % of acrylonitrile content, and more preferably 18 ∼ 35 mass % of acrylonitrile. When content of acrylonitrile in NBR is in these ranges, NBR becomes well dispersible in the CR. Though reason is unclear, it is presumed that NBR's mutual solubility with CR increases.

Further, NBR as a binder material is preferably low viscous NBR. Mooney viscosity of NBR is preferably in the range of 15 ∼ 75 at ML₁₊₄(100 degree) M, more preferably in the range of 25 ∼ 65 M. When Mooney viscosity of NBR is in this range, dispersibility of the NBR with the CR becomes excellent.

### (Masterbatch)

2-mercaptoimidazoline content in a masterbatch is 50 ∼ 90 mass %, and the NBR content in the masterbatch is preferably 50 ∼ 10 mass %. More preferably, 2-mercaptoimidazoline content is 65 ∼ 85 mass % and the NBR content is 35 ∼ 15 mass %. When 2-mercaptoimidazoline and the NBR are in the range of these contents, dispersibility of 2-mercaptoimidazoline in the masterbatch is good, which results in good dispersibility in the CR. Further, the masterbatch can be produced without any problem.

Various known additive agents can be added to the masterbatch if necessary. Processability and operatability are improved, for example, by adding 0.1 ∼ 5 mass % of a general processing aid like stearic acid, a plasticizer, a filler and so on.

### (method of producing masterbatch)

For a method of producing a masterbatch, a kneading apparatus such as a direct vent kneader, a double roller, a feeder ruder, a single shaft or double shaft extruder, a ram type extruder and so on, can be used. With a single or plurality of these kneading apparatuses, a masterbatch is processed to produce a required shape.

At first, after the NBR is kneaded by a kneading apparatus, powder of 2-mercaptoimidazoline is added separately, to increase its content step by step until specific content. Temperature of kneading process is preferably 80 ∼ 150 degrees depending on kinds of the binder material. Further, kneading time is preferably 5 ∼ 30 minutes. After kneading, a product is discharged from kneading apparatus (discharging dough), is cut into small particles to form pellets in the shape of cylinder or square. Further, as necessary, at the beginning of kneading or during kneading, other additives like the processing aid or plasticizer described above, etc. can be added to an extent that the purpose of the present invention is affected.

Compared with a binder material of the conventional masterbatch, the 2-mercaptoimidazoline-containing masterbatch including the NBR as the binder material can disperse in a CR compound rapidly, and can improve molding contamination at the time of molding.

### Embodiments

The present invention will be described with embodiments as follows, but is not limited thereto. Production and evaluation of the masterbatch are performed, and production and evaluation of the CR compound are performed.

### < masterbatch composition >

As shown in table 1, masterbatches are produced by using 40 parts by mass of various binder materials as shown below to 60 mass part of 2-mercaptoimidazoline.
2-mercaptoimidazoline : SANCELER 22C (produced by Sanshin Chemical Industry Co.)
Binder materials :
(1) Embodiment 1 : NBR1 is N240S (produced by JSR Co.). Mooney viscosity ML₁₊₄(100 degrees) is 56 M. Content of acrylonitrile (bonded acrylonitrile) is 26 part by mass %.
(2) Embodiment 2 : NBR2 is N225SH (produced by JSR Co.). Mooney viscosity ML₁₊₄(100 degrees) is 85M. Content of acrylonitrile (bonded acrylonitrile) is 43 part by mass %.
(3) Comparison 1 : EPDM/EVA. EPDM:EVA is mass ratio of 50:50. EPDM is EPT4045 (produced by Mitsui Chemical Co.). Mooney viscosity ML₁₊₄(100 degrees) is 45 M. Ethylene content is 54 mass %. Diene content is 8.1 mass %. EVA is Ultrasen 684 (produced by Toso Co.). Content of vinyl acetate is 20 parts by mass %.
(4) Comparison 2 : EPDM is EPT4045 (produced by Mitsui Chemical Co.).
(5) Comparison 3 : ECO is epichlorohydorin rubber (Hydorin T3100, produced by Japan Zeon Co.). Mooney viscosity ML₁₊₄(100 degree) is 70M.

### < Process of kneading and molding of masterbatch >

At first, a binder material was kneaded for 1 minute with a direct vent type 1 L kneader preheated at 100 degrees. To get 60 mass % of 2-mercaptoimidazoline, 2-mercaptoimidazoline was separated in three portions and added three times and kneaded for 3 minutes for each time to obtain mixture. The mixture was discharged from the direct vent type 1 L kneader and was formed in a sheet shape having approximately 5 mm thickness sheet by an open roll.

### < evaluation method of masterbatch >

### 1. adhesion to roll

× : this indicates a masterbatch showing strong dough adhesion to roll at the time of roll process.
Δ: this indicates a masterbatch showing a little dough adhesion to roll at the time of roll process, and being processible.
○: this indicates a masterbatch showing little dough adhesion to roll at the time of roll process, and being processible favorably.

### 2. Cross-linking of masterbatch

× : This indicates that a masterbatch reacts with the binder material to deactivate, thereby cross-linking decreases.
○ : This indicates that a Masterbatch's doesn't react with the binder material to keep its reactivity of cross-linking.

### 3. Easiness of cutting

Each processed masterbatch of 5 mm thin sheet lays and left for a day at room temperature. Thereafter, evaluation is made by cutting the sheet with scissors.
× : This indicates the sheet is hard and it is difficult to cut.
Δ: This indicates a sheet is a little hard, but it can be cut.
○ : This indicates a sheet is soft and it can be easily cut.

**[Table 1]**

| Masterbatch | Embodiment 1 | Embodiment 2 | Comparison 1 | Comparison 2 | Comparison 3 |
|---|---|---|---|---|---|
| Mark of Masterbatch | M 1 | M 2 | M 3 | M 4 | M 5 |
| <content> mass portion | | | | | |
| NBR 1 | 40 | | | | |
| NBR 2 | | 40 | | | |
| EPDM/EVA | | | 40 | | |
| EPDM | | | | 40 | |
| ECO | | | | | 40 |
| 2-mercaptoimidazoline | 60 | 60 | 60 | 60 | 60 |
| <Evaluation> | | | | | |
| adhesion to roll | Δ | Δ | × | Δ | × |
| Cross-linking of Masterbatch | ○ | ○ | × | × | ○ |
| Easiness of cutting | ○ | Δ | ○ | ○ | ○ |

### < Process of producing CR compound >

SRF carbon, colza oil, ZnO, MgO, stearic acid, the accelerating agent TT (Nocceler TT, produced by Ouchi Shinko Chemical Industrial Co.) and the anti-aging agent (3C, produced by Seiko Chemical Co.) were mixed to the CR polymer (B-30, produced by Toso Co.) with a compounding ratio shown in Table 2 and kneaded with 1 L kneader, thereafter, were discharged as CR compound. Setting up was as following. A slit of double open roll of 6 inches at room temperature was 3 mm, a front roll turns at 14 rpm, a rear roll turns at 18 rpm and guide width was 300 mm. The CR compound produced with 1 L kneader was coiled to the double open rolls, the 5 mm-thick masterbatches (M1 ∼ M5) including 2-mercaptoimidazoline produced in embodiments 1 ∼ 2 and comparisons 1 ∼ 3 and were kneaded by rolls in each batch process described in table 2.

Thereafter, extrusions were performed ten times to obtain CR compound (C1 ∼ C5) including the dispersed masterbatch. Mold of 120 × 120 × 2 mm covered with chromium plate was used. Cross linking molding was performed by compression molding of 180 degree for 10 minutes.

### < Evaluation method of CR compound >

### 1. Dispersibility

CR compound kneaded with the 1 L kneader was coiled to a role of 6 inches, one lump of a masterbatch in an amount shown in Table 2 was added to a bank, after 30 seconds, sheet was stripped from the role. Evaluation of dispersibility of white masterbatch was performed by appearance. Further, in a case where masterbatch is soft, it can be extended immediately to be kneaded rapidly into CR compound and roughness becomes very few. Therefore, roughness was evaluated, too.

### (1) Dispersibility (white is indicator)

× : This indicates that a lot of white of masterbatch exist in black CR compound.
Δ : This indicates that a few white of masterbatch exist in black CR compound.
○ : This indicates that no white of masterbatch exists in black CR compound.

### (2) Dispersibility (roughness)

× : This indicates that a lot of roughness exist on a CR compound.
Δ : This indicates that a few roughness exist on CR compound.
○ : This indicates that almost no roughness exists on CR compound.

### 2. Mold contamination

Chromium plated mold of 120 × 120 × 2 mm was used to perform compression molding at 180 degrees for 10 minutes. This process was performed 20 times using respective CR compounds shown in Table 2. Mold contamination was evaluated based on the condition of dust bonding on the mold surface.
× : This indicates that a lot of adhesive materials on the mold exist. Thereby, surface of the cross-linking materials molded by continuous molding is not smooth.
Δ : This indicates that adhesive materials on the mold is observed. But surface of cross-linking material molded by continuous molding is almost smooth.
○ : This indicates that no adhesive material on the mold exists. Thereby, surface of cross-linking material molded by continuous molding is smooth.

Table 1 shows results of evaluations for masterbatch, and Table 2 shows results of evaluations for CR compound.

**[Table 2]**

| CR compound | Composition 1 | Composition 2 | Composition 3 | Composition 4 | Composition 5 |
|---|---|---|---|---|---|
| Mark of CR compound | C 1 | C 2 | C 3 | C 4 | C 5 |
| <Content> mass portion | | | | | |
| CR polymer | 100 | 100 | 100 | 100 | 100 |
| SRF Carbon | 40 | 40 | 40 | 40 | 40 |
| Colza Oil | 30 | 30 | 30 | 30 | 30 |
| ZnO | 3 | 3 | 3 | 3 | 3 |
| MgO | 4 | 4 | 4 | 4 | 4 |
| Stearic Acid | 2 | 2 | 2 | 2 | 2 |
| accelerating agent TT | 0.5 | 0.5 | 0.5 | 0.5 | 0.5 |
| antiaging agent 3C | 6 | 6 | 6 | 6 | 6 |
| Mark of masterbatch | M1 | M2 | M3 | M4 | M5 |
| Masterbatch | 1.4 | 1.4 | 1.4 | 1.4 | 1.4 |
| <Evaluation> | | | | | |
| Dispersibility (White) | ○ | Δ | ○ | Δ | ○ |
| Dispersibility (roughness) | ○ | Δ | ○ | Δ | ○ |
| Mold contamination | ○ | ○ | × | Δ | × |

As understood from the result of evaluations shown in Table 1, the masterbatch of embodiment 1 can be processed by role, and both of cross-linking of the masterbatch and easiness of cutting are excellent features. Further, masterbatch of embodiment 2 has a little high Mooney viscosity ML₁₊₄(100 degree) of NBR and it is a little hard, but can be cut and can be processed by roll. Cross-linking of masterbatch of embodiment 2 is excellent. On the other hand, the masterbatch of comparison 1 comprises EPDM/EVA as a binder material, and was inferior in roll adhesivity and cross-linking of the masterbatch. Masterbatch of comparison 2 comprises EPDM as a binder material, was easily to cross-link, so cross-linking of the masterbatch is inferior. The masterbatch of comparison 3 comprises epichlorohydrin rubber as a binder material, so roll adhesivity is inferior.

As understood from the result of evaluations shown in Table 2, CR compound using the masterbatch of embodiment 1 has excellent features of dispersibility (white), dispersibility (roughness) and mold contamination. The CR compound using the masterbatch of embodiment 2 has a little inferior solubility with CR, but is usable. On the other hand, The CR compound using the masterbatch of comparison 1 continues cross-linking, so its mold contamination is inferior. CR compound using masterbatch of comparison 2 has a little inferior features of dispersibility and mold contamination. The CR compound using the masterbatch of comparison 3 has an inferior feature of mold contamination.

## Claims

1. 2-mercaptoimidazoline-containing masterbatch using nitrile rubber as a binder material.

2. 2-mercaptoimidazoline-containing masterbatch according to Claim 1, comprising
50 ∼ 90 mass % of the 2-mercaptoimidazoline and 50 ∼ 10 mass % of the nitrile rubber.

3. 2-mercaptoimidazoline-containing masterbatch according to Claim 1 or 2, comprising
the nitrile rubber including 15 ∼ 40 mass % of acrylonitrile.
